# EUROPÄISCHE PATENTSCHRIFT

(11) **EP 1 098 917 B1**
(45) Veröffentlichungstag und Bekanntmachung des Hinweises auf die Patenterteilung: **20.03.2002**
(21) Anmeldenummer: 99959328.8
(22) Anmeldetag: 25.11.1999
(51) Int. Cl.: C08F 279/02

(54) **HOCHSCHLAGFESTE POLYSTYROL-SPRITZGIESSTYPE**
HIGHLY SHOCK-RESISTANT POLYSTYRENE INJECTION MOLDING DIE
TYPES DE MOULAGE PAR INJECTION DE POLYSTYRENE A HAUTE RESISTANCE AUX CHOCS

(30) Priorität: 01.12.1998 DE 19855408; 15.06.1999 DE 19927125
(43) Veröffentlichungstag der Anmeldung: 16.05.2001
(73) Patentinhaber: BASF AKTIENGESELLSCHAFT, 67056 Ludwigshafen (DE)
(72) Erfinder: SCHWABEN, Hans-Dieter, D-67361 Freisbach (DE); MOORS, Rainer, D-76726 Germersheim (DE); MÖDERSHEIM, Norbert, D-67227 Frankenthal (DE)
(86) Internationale Anmeldenummer: EP9909097
(87) Internationale Veröffentlichungsnummer: WO0032662

(56) Entgegenhaltungen:
- EP-A- 0 422 837
- EP-A- 0 726 280
- US-A- 4 183 878
- US-A- 4 187 261

## Beschreibung

Die vorliegende Erfindung betrifft schlagzähes Polystyrol mit einem Kautschukgehalt von maximal 10 Gew.-% sowie ein Verfahren zur Herstellung.

Hochschlagfeste Polystyrole (HIPS) mit einem typischen Kautschukgehalt zwischen 7 und 9 % nehmen dank ihres günstigen Preis-/Leistungsverhältnisses einen festen Platz in der Bau-, Sanitär- und Möbelindustrie sowie als Gehäusewerkstoff in der Unterhaltungselektronik und der Computerindustrie ein. Aus historischen Gründen werden dabei zum großen Teil Materialtypen eingesetzt, die sich aufgrund ihrer Zusammensetzung, ihrer morphologischen Struktur und ihres molekularen Aufbaus sowohl für die Extrusion als auch für das Spritzgießen eignen.

Universaltypen sind immer Kompromißtypen. Optimierte Eigenschaften sind nur mit maßgeschneiderten Werkstoffen zu erreichen, die dann aber beachtliche Potentiale zur Senkung der Kosten und zur Erhöhung der Produktivität mitbringen können. Beides sind nachdrücklich vorgebrachte Forderungen von OEMs und Verarbeitern.

Auch die hinsichtlich Größe und Wanddicke immer anspruchsvolleren Konstruktionen erfordern heute leistungsfähige schlagfeste PS-Typen, die speziell auf die Verarbeitungsparameter beim Spritzgießen zugeschnitten sind. Eine bessere Verarbeitbarkeit bei hoher mechanischer Festigkeit standen somit an der Spitze des Anforderungsprofiles für ein neues Spritzgußprodukt.

Verbesserung der Verarbeitbarkeit heißt in erster Linie Erhöhung der Fließfähigkeit. Zwei Wege führen bei schlagfestem Polystyrol zu diesem Ziel:
- die Zugabe von Schmiermitteln, die allerdings die Wärmeformbeständigkeit deutlich verschlechtert, und
- die Verringerung des Molekulargewichts, die eine Abnahme der mechanischen Festigkeit zur Folge hat.

Schlagfeste Polystyrole mit verbesserter Fließfähigkeit sind beispielsweise beschrieben in US 5,244,977, US 4,433,099 oder EP-A 0 648 789. Die erreichten Zähigkeiten und/oder Schmelzfließraten sind aber für viele Spritzgußanwendungen nicht ausreichend.

Aufgabe der vorliegenden Erfindung war es, den genannten Nachteilen abzuhelfen und ein neues, kautschukmodifiziertes Polystyrol mit optimalen Spritzgußeigenschaften ohne Kompromisse bei den Gebrauchseigenschaften zu entwickeln. Das Material sollte wirtschaftlich in der Verarbeitung sein und tieftemperaturschlagzähe Teile mit gutem Oberflächenglanz und der für Polystyrol typischen Medienbeständigkeit ergeben.

Demgemäß wurde ein schlagzähes Polystyrol mit einem Kautschukgehalt von maximal 10 Gew.-% gefunden, wobei das schlagzähe Polystyrol eine Schmelze-Volumen-Fließrate MVR (200°C/5 kg gemessen nach ISO 1133) im Bereich von 8 bis 12 cm³/10 min und eine Charpy Kerbschlagzähigkeit (nach ISO 179/1eV, Kerbe gefräst) im Bereich von 16 bis 20 kJ/m² aufweist.

Die mittlere Teilchengröße der Kautschukpartikel des erfindungsgemäßen schlagzähen Polystyrols liegt im allgemeinen im Bereich von 1,5 bis 2,5 µm.

Der Kautschukgehalt liegt bevorzugt im Bereich von 7 bis 9 Gew.-%.

Bevorzugt weist das schlagzähe Polystyrol eine Vicat-Erweichungstemperatur B von mindestens 89°C auf. Die Matrix ist bevorzugt ausschließlich aus Polystyrol aufgebaut.

Das schlagzähes Polystyrol weist noch nach 5-facher Verarbeitung bei 250°C eine Charpy Kerbschlagzähigkeit im Bereich von 12 bis 16 kJ/m² auf.

Zur Herstellung des schlagzähen Polystyrols kann ein Kautschuk mit einer Lösungsviskosität im Bereich von 50 bis 250 mPas (gemessen als 5,4 gew.-%ige Lösung in Toluol) verwendet werden.

Als Kautschukkomponente für das erfindungsgemäße schlagfeste Polystyrol werden bevorzugt Homo-Polybutadiene eingesetzt. Diese Kautschuke bestehen aus 1,2-vinyl-, 1,4-cis- und 1,4-trans-Einheiten. Polybutadiene mit einem 1,4-cis-Anteil von mehr als 95 % haben sich als besonders geeignet erwiesen. Besonders bevorzugt werden Polybutadiene mit einem 1,4-cis-Anteil von mehr als 95 % und einer Lösungsviskosität im Bereich von 50 bis 250 mPas eingesetzt. In der Regel führen Polybutadiene mit einer niedrigeren Lösungsviskosität zu Produkten mit zu geringer Kautschukteilchengröße und damit zu schlechten mechanischen Eigenschaften, während Polybutadiene mit einer höheren Lösungsviskosität als 250 mPas zu Kautschuklösungen führen, die infolge ihrer hohen Viskosität nicht mehr zuverlässig zu handhaben sind.

Des weiteren wurde ein Verfahren zur Herstellung des schlagzähen Polystyrols gefunden, wobei man kontinuierlich eine Lösung des Kautschuks in Styrol in einem ersten Rührreaktor in Gegenwart von 50 bis 500 ppm eines peroxidischen Initiators, bezogen auf die eingesetzte Menge an Styrol, bei einem Feststoffgehalt des Reaktionsgemisches im Bereich von 5 bis 20 Gew.-% polymerisiert, in einem zweiten Rührreaktor in Gegenwart eines Molekulargewichtsreglers bei einem Feststoffgehalt des Reaktionsgemisches, der über dem Phaseninversionspunkt liegt, polymerisiert und in mindestens einem weiteren Reaktor bis zu einem Feststoffgehalt von mindestens 75 Gew.-% polymerisiert.

Bevorzugt wird im ersten Rührreaktor bei einer Temperatur im Bereich von 110 bis 135°C und im zweiten Rührreaktor bei einer Temperatur im Bereich von 115 bis 140°C polymerisiert.

Das Reaktionsgemisch kann anschließend in einer Entgasungszone bei einer Temperatur im Bereich von 210 bis 235°C entgast werden.

Der Kautschuk wird in monomerem Styrol unter Zusatz von bis zu 25 % eines indifferenten Lösungsmittels gelöst. Als Lösungsmittel geeignet sind aromatische Kohlenwasserstoffe wie Toluol, Ethylbenzol oder Xylol. Bevorzugt ist Ethylbenzol.

Dieser Kautschuklösung wird bei Bedarf ein Mineralöl vom Typ eines medizinischen Weißöls ("Weißöl") als Fließhilfsmittel in einer Menge von bis zu 10 Gew.-% und ein Antioxidans vom Typ eines sterisch gehinderten Phenols in Mengen von bis zu 0,3 Gew.-%, jeweils bezogen auf die Kautschuklösung, zugegeben.

Als peroxidischer Initiator wird ein organisches Peroxid verwendet, das bei der jeweiligen Reaktionstemperatur eine Halbwertszeit von etwa 5 bis 30 Minuten aufweist. Man kann Alkyl- oder Acylperoxide, Hydroperoxide, Perester oder Peroxicarbonate einsetzen. Vorzugsweise verwendet man einen pfropfaktiven Initiator wie Dibenzoylperoxid, t-Butylperoxi-2-ethylhexanoat, t-Butylperbenzoat, 1,1-Di-(t-butylperoxy)-cyclohexan oder 1,1-Di-(t-butylperoxy)-3,3,5-trimethylcyclohexan. Der Initiator wird in den ersten Rührkessel bevorzugt in einer Menge von 50 bis 500 ppm, bezogen auf das monomere Styrol und bevorzugt als Lösung in einem inerten Lösungsmittel, z.B. Ethylbenzol, kontinuierlich zugegeben.

Als Molekulargewichtsregler können die üblicherweise verwendeten Merkaptane mit 4 bis 18 C-Atomen in einer Menge von 0,01 bis 0,3 Gew.-%, bezogen auf Styrol, eingesetzt werden. Besonders bewährt haben sich n-Butyl, n-Octyl sowie n- und t-Dodecylmercaptan. Im erfindungsgemäßen Verfahren ist es wichtig, das Mercaptan im zweiten Rührkessel zuzugeben.

In der Regel wird für die Polymerisation der Matrix des erfindungsgemäßen schlagzähen Polystyrols ausschließlich Styrol eingesetzt. Bevorzugt werden keine bi- oder mehrfunktionellen Comonomeren, wie Butandioldiacrylat oder Divinylbenzol, verwendet.

Das erfindungsgemäße schlagzähe Polystyrol stellt ein neues Produkt mit herausragenden Eigenschaften für Spritzguß dar, das die Herstellung großformatiger Gehäuseteile erheblich erleichtert.

Gerade bei der Herstellung von größeren Formen kommt es auf das richtige Grundprodukt an. Auf ein Produkt, das mit besonders leichtem Schmelzefluß optimale Verarbeitungsparameter ermöglicht. Mit einer idealen Kombination aus Schlagzähigkeit, Fließfähigkeit und Rißbeständigkeit setzt das erfindungsgemäße schlagzähe Polystyrol neue Maßstäbe für die Performance von schlagzähen Polystyrolen. Als leichtfließendes Produkt ist es auch für das verbreitete Gasinnendruckverfahren gut geeignet. Die hohe mono- und multiaxiale Zähigkeit erlaubt dünne Wandstärken und garantiert eine lange Lebensdauer, selbst bei extremer Beanspruchung.
Das erfindungsgemäße schlagzähe Polystyrol kann sowohl in natur belassen als auch individuell eingefärbt werden. Weitere Zusatzausrüstungen, wie Antistatika, UV-Stabilisatoren oder Gleitmittel sind ebenfalls möglich.

Das erfindungsgemäße schlagzähe Polystyrol kann beispielsweise mit folgenden Komponenten entweder alleine oder in Kombination modifiziert werden:
- Nicht zähmodifiziertes Standard-Polystyrol (GPPS). Als Standard-Polystyrol eignen sich Produkte mit einem Molekulargewicht (M_{w}) zwischen 170 000 g/mol und 400 000 g/mol. Diese Standard-Polystyrol-Marken können bereits z.B. bis zu 8 Gew.-% eines Gleitmittels vom Typ Weißöl enthalten. Die Menge an zugesetztem Standard-Polystyrol liegt zwischen 0 und 75 %, bezogen auf die Summe aus Grundprodukt und Standard-Polystyrol.
- Wenn ein eingefärbtes Produkt hergestellt werden soll, können handelsübliche, für die Einfärbung von Polystyrol geeignete Farbmittel verwendet werden. Diese Farbmittel werden gegebenenfalls in einer Menge von bis zu 5 Gew. %, bezogen auf die Summe aus Grundprodukt und Standard-Polystyrol benötigt.
- Als Flammschutzmittel können bei Bedarf bis zu 40 Prozent, bezogen auf die Summe aus Grundprodukt und Standard-Polystyrol handelsübliche, für die Flammfestausrüstung von Polystyrol geeignete Substanzen bzw. Substanzkombinationen zugegeben werden.
- Als Fließhilfsmittel wird Weißöl, bevorzugt einer Viskosität von 60 bis 120 mPas in einer Menge von bis zu 7 Gew.-%, bezogen auf die Summe aus Grundprodukt und Standard-Polystyrol, zugesetzt.
- Als Lichtschutzmittel werden bei Bedarf bis zu 2 Gew.-%, bezogen auf die Summe aus Grundprodukt und Standard-Polystyrol, für Polystyrol geeignete Substanzen oder Substanzkombinationen zugegeben. Geeignete Substanzen sind z.B. in Gächter/Müller, Kunststoff-Additive, 2. Ausgabe, Carl Hanser Verlag München Wien 1983, Kap. 3 beschrieben.
- Als Antioxidantien werden sterisch gehinderte Phenole in Mengen bis zu 0,5 Gew.-%, bezogen auf die Summe aus Grundprodukt und Polystyrol, eingesetzt.
- Als sonstige typische Polymeradditive können z.B. bis zu 1 Gew.-% einer Metallseife, bis zu 5 Gew.-% eines Wachses, bis zu 5 Gew.-% Silikonöl, bis zu 0,5 Gew.-% optische Aufheller, bis zu 30 Gew.-% (neben dem erfindungsgemäß verwendeten Kautschuk) sonstige Schlagzähverbesserer sowie bis zu 35 Gew.-% Füllstoffe und Verstärkungsmittel, jeweils bezogen auf die Summe aus Grundprodukt und Standard-Polystyrol zugegeben werden.

### Bessere Fließfähigkeit

Mit dem erfindungsgemäßen schlagzähen Polystyrol lassen sich bei allen Wandstärken deutlich längere Fließwege realisieren als mit vergleichbaren Polystyrolen. Dies wird an den in Spiralwerkzeugen mit unterschiedlicher Wandstärke erzielten Fließweglängen deutlich. So lassen sich sowohl dünnwandige als auch große Bauteile mit komplexen Geometrien problemlos und mit hoher Produktivität herstellen.

### Bessere Schlagzähigkeit

In der Kombination aus Fließfähigkeit und Kerbschlagzähigkeit definiert das erfindungsgemäße schlagzähe Polystyrol einen neuen Stand der Technik. In Punkto Zähigkeit wird Standard-ABS-Niveau erreicht.

### Bessere Spannungsrißbeständigkeit

Bei Spannungsrißtests erweist sich das erfindungsgemäße schlagzähe Polystyrol durchweg als Produkt mit einer recht hohen Beständigkeit sowohl gegenüber i-Propanol, das in vielen Reinigungsmitteln enthalten ist, als auch gegenüber fetthaltigen Lebensmitteln.

### Mehrfachverarbeitung

Das Verhalten von schlagfesten Polystyrolen bei wiederholter Verarbeitung ist immer dann von Bedeutung, wenn Teile recycelt werden. Das erfindungsgemäße schlagzähe Polystyrol wurde 5 mal bei 250°C verarbeitet und die Schlagzähigkeit nach jedem Verarbeitungsschritt bestimmt.
Hervorzuheben ist, daß das erfindungsgemäße schlagzähe Polystyrol nach 5 Verarbeitungsschritten immer noch deutlich höhere Zähigkeitswerte aufweist als die Neuware des Vergleichsmaterials.

### Wärmeformbeständigkeit

Obwohl der Meltindex von erfindungsgemäßem schlagzähem Polystyrol praktisch doppelt so hoch ist wie bei herkömmlichen Polystyrolen, ist die Wärmeformbeständigkeit gleich hoch. Deutlich höher liegen auch die Kerbschlagzähigkeit (65 %) und die multiaxiale Zähigkeit (bis 90 %).

### Optische Eigenschaften

Das erfindungsgemäße schlagzähe Polystyrol ist ein opales Produkt, dessen Eigenfarbe auf dem gleichen Niveau der anderen hochschlagfesten Polystyrole liegt und in der Regel matte Oberflächen ergibt.
Bei hohen Masse- und Werkzeugtemperaturen sind jedoch auch Oberflächen mit hohen Glanzwerten möglich.

Das erfindungsgemäße schlagzähe Polystyrol zeichnet sich dabei durch höchste Kennwerte in der Zähigkeit, Fließfähigkeit und Wärmeformbeständigkeit aus. Die exzellenten mechanischen Eigenschaften garantieren eine extrem leichte Verarbeitbarkeit und somit eine Vielzahl von individuellen Anwendungen; wie z.B. für:
- Unterhaltungs-Elektronik (Frontrahmen und Rückwände für TV, Chassis und Blenden für Videorecorder oder Stereoanlagen)
- Büro- und Informationstechnik (Tastaturen, Drucker, PC-Blenden und -Gehäuse etc.)
- Haushaltsgeräte (Innenteile für Staubsauger und Kühlgeräte)
- Möbel (Schubladen und Leisten)
- Audio- und Videokassetten (Gehäuseteile) u.v.a.

### Beispiele

Die Eigenschaften der in den Beispielen und Vergleichsversuchen erhaltenen Produkte wurden an entsprechenden Proben wie folgt gemessen:
- Die Viskositätszahl (VZ des Polystyrols in ml/g wurde gemäß DIN 53 724 als 0,5%ige Lösung in Toluol bei 23°C bestimmt.
- Polybutadien wurde durch Iodzahl bestimmt.
- Die Charpy-Kerbschlagzähigkeit a_{K} (Kerbe gefräst) wurde in einem Schlagbiegeversuch gemäß ISO 179/1eA bestimmt.
- Streckspannung, E-Modul und Reißdehnung wurden im Zugversuch nach ISO 527 bestimmt. Die vorgeschriebenen Norm-Probekörper wurden durch Spritzguß bei einer Massetemperatur von 220°C und einer Formtemperatur von 45°C hergestellt.
- Der Schmelzfließindex (MVI 200°C/5 kp) wurde nach ISO 1133 und die Vicat Erweichungstemperatur B nach ISO 306 bestimmt.
- Die mittlere Teilchengröße der Kautschukpartikel wurde mit einem "Mastersizer" der Firma Malvern Instruments erhalten und wird als d₅₀-Wert in [µm] angegeben.

Die in den Beispielen und Vergleichsversuchen angegebenen Mengen in Prozent oder ppm beziehen sich auf das Gewicht.

### Beispiel 1

In der Reaktorkaskade aus zwei in Serie geschalteten Rührkesseln K1 und K2 mit 12 bzw. 30 l Inhalt und zwei Turmreaktoren T1 und T2 von jeweils 30 l Inhalt wird eine Lösung von 6,6 % Polybutadienkautschuk (Lösungsviskosität 140 mPas, 1,4-cis-Gehalt > 96 %), 5 % Ethylbenzol, 1% Weißöl und 0,1 % eines handelsüblichen Antioxidans in 87,3 % Styrol bei einem Durchsatz von 12 kg/h bis zu einem Feststoffgehalt von 80 t 1 % polymerisiert. Diese Kautschuklösung wird kontinuierlich auf 120°C vorgewärmt, mit 170 ppm 1,1-Di-t-butylperoxi-3,3,5-trimethylcyclohexan (als 2%ige Lösung in Ethylbenzol) versetzt und dem ersten Rührkessel zugeführt, in dem die mittlere Verweilzeit 15 Minuten bei 122°C beträgt. Der Kesselinhalt wird mittels Zahnradpumpe kontinuierlich ausgetragen, mit 650 ppm t-Dodecylmercaptan versetzt und dem zweiten Rührkessel zugeführt. Darin wird die Lösung unter Rühren (Ankerrührer, Drehzahl 100 min⁻¹) mit einer mittleren Verweilzeit von 50 Minuten bei 125°C gehalten. Der Inhalt wird kontinuierlich mit einer Zahnradpumpe den Turmreaktoren zugeführt, in denen von 127 auf 145°C ansteigend bis zu einem Feststoffgehalt von 55 % bzw. von 145°C auf 160°C ansteigend bis zu einem Feststoffgehalt von 80 % polymerisiert wird. Das ausgetragene Gemisch wird im Wärmetauscher W auf 225°C erhitzt und in den auf 3 mbar gehaltenen Behälter EG entspannt, Lösungsmittel und nicht umgesetztes Monomer abgezogen, kondensiert und zurückgeführt.

### Vergleichsversuch 1 (Typ A)

Es wird verfahren, wie in Beispiel 1 beschrieben, jedoch mit dem Unterschied, daß Polybutadien mit einer Lösungsviskosität von 165 mPas und einem 1,4-cis-Gehalt von 35 % eingesetzt und bei der Polymerisation kein Peroxid zugesetzt wird. Die Reaktionstemperaturen in den beiden ersten Reaktoren werden deshalb jeweils 8°C höher eingestellt als beispielsgemäß; die Reaktionstemperaturen in den Turmreaktoren werden so eingestellt, daß sich ein Feststoffgehalt von 55 % bzw. 80 % ergibt.

### Beispiel 2

In einer kontinuierlich betriebenen Reaktorkaskade aus zwei in Serie geschalteten Rührkesseln (4 m³ und 12 m³) und zwei Reaktionstürmen zu je 11 m³ Inhalt wird eine Lösung aus 6,6 % Polybutadienkautschuk (Lösungsviskosität 140 mPas, 1,4-cis-Gehalt > 96 %), 5 % Ethylbenzol als Lösungsmittel, 1 % Weißöl, 87,3 % Styrol und 0,1 % Antioxidans bei einem Durchsatz von 8750 kg/h bis zu einem Umsatz von 80 ± 1 % polymerisiert (= 7000 kg/h Grundprodukt).

Die Kautschuklösung wird auf 110°C vorgewärmt, mit 190 ppm 1,1-Di-t-butylperoxi-3,3,5-trimethylcyclohexan (als 5%ige Lösung in Ethylbenzol) versetzt und dann im ersten Rührkessel 16 Minuten bei 122°C gehalten. Der Kesselinhalt wird mittels einer Zahnradpumpe kontinuierlich mit 675 ppm t-Dodecylmercaptan versetzt und dem zweiten Rührkessel zugeführt, in dem unter Rühren (Ankerrührer, 30 min⁻¹) 45 Minuten (mittlere Verweilzeit) bei 125°C gehalten wird. Der Kesselinhalt wird kontinuierlich mittels Zahnradpumpe einem 11-m³-Turmreaktor zugeführt, in dem von 127 auf 147°C ansteigend bis zu einem Feststoffgehalt von 57 % polymerisiert wird. Schließlich wird in einem weiteren Turmreaktor gleicher Größe von 145°C auf 158°C ansteigend bis zu einem Feststoffgehalt von 80 % polymerisiert. Der Austrag wird dann auf 223°C erhitzt und in einen auf 2 mbar gehaltenen Behälter (EG) entspannt. Lösungsmittel und nicht umgesetztes Monomer werden abgezogen und zurückgeführt.

Als Vergleichsmaterialien wurden zwei schlagzähe Polystyrole Typ A (PS 476L der BASF) und Typ B (PS 475K der BASF) verwendet.

Vergleicht man die Kerneigenschaften von schlagzähem Polystyrol, das nach Beispiel 1 hergestellt wurde, mit denen der bisherigen Standardtypen A und B, so ist der technische Fortschritt unmittelbar sichtbar (Tabelle 1). Bei unveränderter Wärmeformbeständigkeit (Vicat B) liegt der Schmelzindex doppelt so hoch, und alle mechanischen Kenngrößen sind deutlich besser als die der traditionellen Produkte.

Bedingt durch kleinere Kautschukpartikel liefert Polystyrol nach Beispiel 1 Oberflächen mit höheren Glanzwerten als die Typen A und B. Bei Massetemperaturen von 260°C und 280°C und hohen Werkzeugtemperaturen resultieren sogar Glanzwerte, die nahezu das Niveau erreichen, das für eine Polystyrol-Glanzmarke typisch ist.

Die Ergebnisse von Spannungsrißtests zeigen die gute Beständigkeit von Polystyrol nach Beispiel 1 im Vergleich zu den Typen A und B. Die Prüfungen wurden mit fünf Medien durchgeführt, mit denen Artikel aus Polystyrol häufig in Kontakt kommen (Iso-Propanol, das in vielen Reinigern enthalten ist, Speiseeis, Kaffeesahne, Joghurt sowie eine 1:1-Mischung aus Olivenöl und Ölsäure). Dabei wurden spritzgegossene Probestäbe (80 mm x 15 mm x 2 mm) 24 Stunden lang über eine Radius von 100 mm gebogen, wobei die unter Zugspannung stehende Seite mit dem Medium benetzt war. Im Anschluß daran wurde die Brucharbeit an den Probestäben in einem Schlagtest bestimmt.

Als Resultat zeigt Tabelle 2 die durch das Medium ausgelöste Abnahme der Schlagzähigkeit in Prozent. Polystyrol nach Beispiel 1 schneidet gegenüber allen getesteten Medien besser ab als Typ A. Gegenüber Typ B zeigt Polystyrol nach Beispiel 1 leichte Vorteile gegenüber Eis, Kaffeesahne und Joghurt.

Die Kerbschlagzähigkeit des neuen Spritzgußprodukts liegt bei Raumtemperatur um 65 % höher als die der bisherigen schlagzähen Standardtypen (siehe Tabelle 1). Für viele Einsatzgebiet ist daneben auch das Zähigkeitsniveau bei tiefen Temperaturen von Bedeutung (z.B. in der Kühlgeräteindustrie). Das erhöhte Zähigkeitsniveau bleibt auch bis zu -20°C erhalten, darunter tritt eine Angleichung ein.

Wie deutlich die hohe Fließfähigkeit der neuen Type die Verarbeitbarkeit tatsächlich verbessert, zeigen die Resultate von Versuchen mit der Fließspirale (Schmelzetemperatur = 220°C, Werkzeugtemperatur = 45°C; p = 1000 bar).

Unter den gewählten Spritzbedingungen und bei einer Wanddicke von 2,5 mm erreicht das neue Produkt eine Fließweglänge von 600 mm gegenüber lediglich 450 mm bei Typ A. Bei einer geringeren Wanddicke von 1 mm beträgt das Verhältnis 200 mm zu 120 mm, was einem Plus von beachtlichen 67 % entspricht.

Längere Fließwege bedeuten für die Praxis,
- daß Angußsysteme (bei neuen Spritzgießwerkzeugen) einfacher gestaltet werden können und
- daß komplexe Geometrien leichter zu füllen sind.

Bei bereits ausgeführten Werkzeugen kann die hohe Fließfähigkeit eine Absenkung der Massetemperatur erlauben und damit den Weg zu kürzeren Zyklenzeiten und höherer Produktivität ebnen.

Das Recycling von Spritzgußteilen und insbesondere von Produktionsabfällen stellt stets die Frage nach dem Erhalt der mechanischen Eigenschaften infolge der Mehrfachverarbeitung. Zur diesbezüglichen Beurteilung wurde das Polystyrol nach Beispiel 1 5 mal bei 250°C verarbeitet. Nach jedem Recyclingschritt wurden die mechanischen Eigenschaften bestimmt.

Die Resultate sind in Tabelle 3 zusammengefaßt. Sie verdeutlichen einerseits, daß sich die Zugeigenschaften sowie die Fließfähigkeit und die Wärmeformbeständigkeit gar nicht oder nur geringfügig verändern. Andererseits zeigen sie, daß die Zähigkeit mit jedem Verarbeitungsschritt geringfügig sinkt. Nach dem fünften Verarbeitungsschritt liegt sie um rund 25 % niedriger als bei der Neuware (aber immer noch um rund 20 % über dem Ausgangsniveau von Typ A).

**Tabelle 1:**

| Mechanische und thermische Kennwerte im Vergleich | | | | | |
|---|---|---|---|---|---|
| Prüfung | Prüfnorm | Einheit | Beispiel 1 | Typ A | Typ B |
| MVR 200/5 | ISO 1133 | cm³/10 min | 10 | 5 | 4 |
| Vicat B | ISO 306 | °C | 90 | 90 | 90 |
| Charpy-a_{K} (23°C) | ISO 179/1eA | kJ/m² | 18 | 11 | 11 |
| Charpy-a_{N} (23°C) | ISO 179/1eU | kJ/m² | NB | NB | NB |
| Charpy aN (-30°C) | ISO 179/1eU | kJ/m² | 130 | 135 | 125 |
| Oberflächenglanz | DIN 67 530 | % | 45 | | |
| IZOD-Kerbschlagzähigkeit (23°C) | ASTM 256-A | J/m | 180 | | |
| Durchstoßtest | ISO 6603-2 | J | 15 | 11 | 8 |
| Streckspannung | ISO 527 | MPa | 26 | 23 | 25 |
| Bruchdehnung | ISO 527 | % | 50 | 50 | 40 |
| E-Modul | ISO 527 | MPa | 2000 | 1650 | 1950 |
| Biegefestigkeit | ISO 178 | MPa | 40 | 35 | 39 |
| Brennverhalten | UL 94 | | HB | HB | HB |
| NB: nicht gebrochen | | | | | |

**Tabelle 2:**

| Spannungsrißbeständigkeit, Abnahme der Schlagzähigkeit in % | | | |
|---|---|---|---|
| Medium | Beispiel 1 | Typ A | Typ A |
| i-Propanol | - 20 % | - 28 % | - 13 % |
| Eis | - 15 % | - 21 % | - 18 % |
| Kaffeesahne | - 30 % | - 46 % | - 41 % |
| Joghurt | - 15 % | - 47 % | - 15 % |
| Olivenöl/Olivensäure (1:1) | - 32 % | - 55 % | - 20 % |

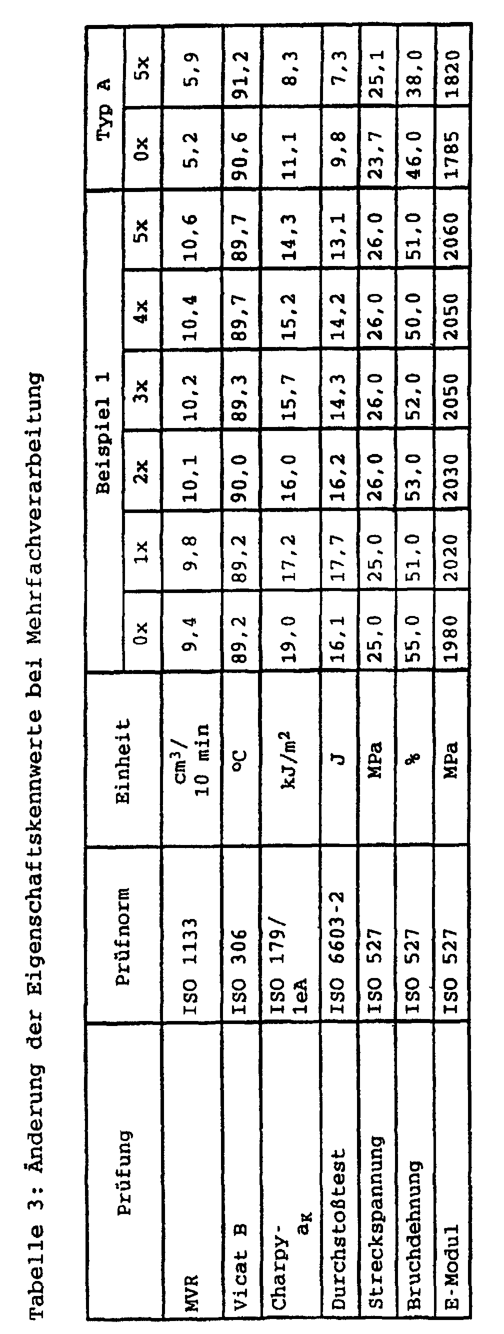

## Patentansprüche

1. Schlagzähes Polystyrol mit einem Kautschukgehalt von maximal 10 Gew.-%, **dadurch gekennzeichnet, daß** das schlagzähe Polystyrol eine Schmelze-Volumen-Fließrate MVR (200°C/5 kg gemessen nach ISO 1133) im Bereich von 8 bis 12 cm³/10 min und eine Charpy Kerbschlagzähigkeit (nach ISO 179/1eA, Kerbe gefräst) im Bereich von 16 bis 20 kJ/m² aufweist.

2. Schlagzähes Polystyrol nach Anspruch 1, **dadurch gekennzeichnet, daß** die mittlere Teilchengröße der Kautschukpartikel im Bereich von 1,5 bis 2,5 µm liegt.

3. Schlagzähes Polystyrol nach einem der Ansprüche 1 oder 2, **dadurch gekennzeichnet, daß** der Kautschukgehalt im Bereich von 7 bis 9 Gew.-% liegt.

4. Schlagzähes Polystyrol nach einem der Ansprüche 1 bis 3, **dadurch gekennzeichnet, daß** das schlagzähe Polystyrol eine Vicat-Erweichungstemperatur B von mindestens 89°C aufweist.

5. Schlagzähes Polystyrol nach einem der Ansprüche 1 bis 4, **dadurch gekennzeichnet, daß** das schlagzähe Polystyrol nach 5-facher Verarbeitung bei 250°C eine Charpy Kerbschlagzähigkeit im Bereich von 12 bis 16 kJ/m² aufweist.

6. Schlagzähes Polystyrol nach einem der Ansprüche 1 bis 5, **dadurch gekennzeichnet, daß** zur Herstellung des schlagzähen Polystyrols als Kautschuk ein Polybutadien mit einem 1,4-cis-Anteil von mehr als 95 % verwendet wird.

7. Schlagzähes Polystyrol nach einem der Ansprüche 1 bis 6, **dadurch gekennzeichnet, daß** zur Herstellung des schlagzähen Polystyrols ein Kautschuk mit einer Lösungsviskosität im Bereich von 50 bis 250 mPas (gemessen als 5,4 gew.-%ige Lösung in Toluol) verwendet wird.

8. Verfahren zur Herstellung eines schlagzähen Polystyrols nach einem der Ansprüche 1 bis 7, **dadurch gekennzeichnet, daß** man kontinuierlich eine Lösung des Kautschuks in Styrol in einem ersten Rührreaktor in Gegenwart von 50 bis 500 ppm eines peroxidischen Initiators, bezogen auf die eingesetzte Menge an Styrol, bei einem Feststoffgehalt des Reaktionsgemisches im Bereich von 5 bis 20 Gew.-% polymerisiert, in einem zweiten Rührreaktor in Gegenwart eines Molekulargewichtsreglers bei einem Feststoffgehalt des Reaktionsgemisches, der über dem Phaseninversionspunkt liegt, polymerisiert und in mindestens einem weiteren Reaktor bis zu einem Feststoffgehalt von mindestens 75 Gew.-% polymerisiert.

9. Verfahren nach Anspruch 8, **dadurch gekennzeichnet, daß** man als Molekulargewichtsregler n-Butyl-, n-Octyl, n-Dodecyl- oder t-Docecylmercaptan in einer Menge im Bereich von 0,01 bis 0,3 Gew.-%, bezogen auf Styrol, einsetzt.

10. Verfahren nach einem der Ansprüche 8 oder 9, **dadurch gekennzeichnet, daß** man die Polymerisation im ersten Rührreaktor bei einer Temperatur im Bereich von 110 bis 135°C und im zweiten Rührreaktor bei einer Temperatur im Bereich von 115 bis 140°C polymerisiert.

11. Verfahren nach einem der Ansprüche 8 bis 10, **dadurch gekennzeichnet, daß** das Reaktionsgemisch anschließend in einer Entgasungszone bei einer Temperatur im Bereich von 210 bis 235°C entgast wird.

## Claims

1. An impact-modified polystyrene with a rubber content of not more than 10% by weight, wherein the impact-modified polystyrene has a melt volume flow rate MVR (200°C/5 kg, measured to ISO 1133) in the range from 8 to 12 cm³/10 min and a Charpy notch impact strength (to ISO 179/1eA, milled notch) in the range from 16 to 20 kJ/m².

2. An impact-modified polystyrene as claimed in claim 1, wherein the median particle size of the rubber particles is in the range from 1.5 to 2.5 µm.

3. An impact-modified polystyrene as claimed in claim 1 or 2, wherein the rubber content is in the range from 7 to 9% by weight.

4. An impact-modified polystyrene as claimed in any of claims 1 to 3, wherein the Vicat softening point B of the impact-modified polystyrene is at least 89°C.

5. An impact-modified polystyrene as claimed in any of claims 1 to 4, wherein the Charpy notch impact strength of the impact-modified polystyrene after it has been processed five times at 250°C is in the range from 12 to 16 kJ/m².

6. An impact-modified polystyrene as claimed in any of claims 1 to 5, wherein the rubber used to prepare the impact-modified polystyrene comprises a polybutadiene with a 1,4-cis fraction above 95%.

7. An impact-modified polystyrene as claimed in any of claims 1 to 6, wherein the rubber used to prepare the impact-modified polystyrene has a solution viscosity in the range from 50 to 250 mPas (measured on a 5.4% strength by weight solution in toluene).

8. A process for preparing an impact-modified polystyrene as claimed in any of claims 1 to 7, which comprises continuously polymerizing a solution of the rubber in styrene in a first stirred reactor in the presence of from 50 to 500 ppm of a peroxidic initiator, based on the amount of styrene used, at a solids content of the reaction mixture in the range from 5 to 20% by weight, polymerizing in a second stirred reactor in the presence of a molecular weight regulator at a solids content of the reaction mixture which is above the phase inversion point, and polymerizing in at least one further reactor to a solids content of at least 75% by weight.

9. A process as claimed in claim 8, wherein the molecular weight regulator used comprises n-butyl, n-octyl, n-dodecyl, or tert-dodecyl mercaptan, the amount being in the range from 0.01 to 0.3% by weight, based on styrene.

10. A process as claimed in claim 8 or 9, wherein the polymerization in the first stirred reactor takes place at from 110 to 135°C and that in the second stirred reactor takes place at from 115 to 140°C.

11. A process as claimed in any of claims 8 to 10, wherein the reaction mixture is then devolatilized in a devolatilizing zone at from 210 to 235°C.

## Revendications

1. Polystyrène résilient à une teneur en caoutchouc de 10 % en poids au maximum, **caractérisé par le fait que** le polystyrène résilient a un indice de fluidité en volume à l'état fondu MVR (200° C/5 kg, mesure selon ISO 1133) qui se situe dans l'intervalle de 8 à 12 cm³/10 minutes et une résistance au choc sur éprouvette entaillée Charpy (selon ISO 179/1eA, entaille fraisée) qui se situe dans l'intervalle de 16 à 20 kJ/m².

2. Polystyrène résilient selon la revendication 1, **caractérisé par le fait que** la dimension de particule moyenne des particules de caoutchouc se situe dans l'intervalle de 1,5 à 2,5 µm.

3. Polystyrène résilient selon une des revendications 1 ou 2, **caractérisé par le fait que** la teneur en caoutchouc se situe dans l'intervalle de 7 à 9 % en poids.

4. Polystyrène résilient selon l'une des revendications 1 à 3, **caractérisé par le fait que** le polystyrène résilient a une température de ramollissement Vicat B d'au moins 89°C.

5. Polystyrène résilient selon l'une des revendications 1 à 4, **caractérisé par le fait que** le polystyrène résilient, après façonnage à cinq reprises à 250°C, a une résistance au choc sur éprouvette entaillée Charpy qui se situe dans l'intervalle de 12 à 16 Kj/m².

6. Polystyrène résilient selon l'une des revendications 1 à 5, **caractérisé par le fait que**, pour la préparation du polystyrène résilient, on a utilisé en tant que caoutchouc un polybutadiène à plus de 95 % de fraction 1,4-cis.

7. Polystyrène résilient selon l'une des revendications 1 à 6, **caractérisé par le fait que**, pour la préparation du polystyrène résilient, on a utilisé un caoutchouc ayant une viscosité en solution qui se situe dans l'intervalle de 50 à 250 mPas (mesure sur une solution à 5,4 % en poids dans le toluène).

8. Procédé pour la préparation d'un polystyrène résilient selon l'une des revendications 1 à 7, **caractérisé par le fait que** l'on polymérise en continu une solution du caoutchouc dans le styrène dans un premier réacteur équipé d'un dispositif d'agitation en présence de 50 à 500 ppm d'un inducteur peroxydique par rapport à la quantité de styrène mise en oeuvre, a une teneur en matières solides du mélange de réaction qui se situe dans l'intervalle de 5 à 20 % en poids, on polymérise dans un deuxième réacteur équipé d'un dispositif d'agitation, en présence d'un régulateur de poids moléculaire, à une teneur en matières solides du mélange de réaction située au-dessus du point d'inversion de phases et dans au moins un autre réacteur, on polymérise jusqu'à une teneur en matières solides d'au moins 75 % en poids.

9. Procédé selon la revendication 8, **caractérisé par le fait que** l'on utilise en tant que régulateur du poids moléculaire le n-butyl-, le n-octyl-, le n-dodécyl- ou le tert-dodécyl-mercaptan en quantité de 0,01 à 0,3 % en poids par rapport au styrène.

10. Procédé selon l'une des revendications 8 ou 9, **caractérisé par le fait que**, l'on polymérise dans le premier réacteur équipé d'un dispositif d'agitation à une température dans l'intervalle de 110 à 135°C et dans le deuxième réacteur équipé d'un dispositif d'agitation à une température dans l'intervalle de 115 à 140°C.

11. Procédé selon l'une des revendications 8 à 10, **caractérisé par le fait que** le mélange de réaction est ensuite dégazé dans une zone de dégazage à une température dans l'intervalle de 210 à 235°C.
